Europäisches Patentamt

European Patent Office

Office européen des brevets

(11) Numéro de publication: **0 169 792**
**A1**

## (12) DEMANDE DE BREVET EUROPEEN

(21) Numéro de dépôt: 85420131.6

(22) Date de dépôt: 17.07.85

(51) Int. Cl.⁴: **H 04 R 25/00**

(30) Priorité: 18.07.84 FR 8412102

(43) Date de publication de la demande:
29.01.86 Bulletin 86/5

(84) Etats contractants désignés:
AT BE CH DE GB IT LI LU NL SE

(71) Demandeur: HORLOGERIE PHOTOGRAPHIQUE
FRANCAISE
Le Bouchet
F-74130 Bonneville(FR)

(72) Inventeur: Guillou, Denis
chez Mage Ayze
F-74130 Bonneville(FR)

(74) Mandataire: de Beaumont, Michel
Cabinet Poncet B.P. 317
F-74008 Annecy Cédex(FR)

(54) Capsule réceptrice téléphonique compatible avec les prothèses auditives pour malentendants.

(57) La capsule (1) comprend un transducteur de type électrodynamique (2) avec une membrane centrale (6) solidaire d'une bobine principale (7), l'ensemble étant suspendu dans le boîtier (3). Une bobine auxiliaire (12) fixe, connectée en parallèle sur la bobine principale (7), et montée fixe dans le boîtier (3), produit un champ magnétique auxiliaire susceptible d'être capté par une prothèse auditive pour malentendant.

FIG 1

CAPSULE RECEPTRICE TELEPHONIQUE COMPATIBLE AVEC LES PROTHESES AUDITIVES POUR MALENTENDANTS

La présente invention concerne les capsules réceptrices téléphoniques, comprenant généralement un boîtier renfermant un transducteur pour transformer en vibrations sonores les signaux électriques acheminés sur ses bornes d'entrée par une ligne d'alimentation.

Les transducteurs actuellement utilisés pour la réception en téléphonie fonctionnent suivant deux principes connus : le principe électrodynamique - le principe électromagnétique.

Les transducteurs électromagnétiques, ou transducteurs à réluctance variable, sont spécialement adaptés à la téléphonie depuis longtemps. Ils comportent toutefois des inconvénients, notamment concernant la qualité de reproduction sonore, et tendent peu à peu à être remplacés par des transducteurs de meilleure qualité.

Les transducteurs électrodynamiques, d'application plus récente dans la téléphonie pour des questions de technologie et d'optimisation, regroupent les transducteurs dits à bobine mobile. Ces transducteurs sont intéressants dans la mesure où leur fabrication est simple et, surtout, où leurs performances électroacoustiques sont meilleures que celles des autres transducteurs.

Les prothèses auditives pour malentendants sont conçues pour amplifier les vibrations accoustiques reçues et les rendre perceptibles par l'oreille. Toutefois, certaines prothèses comportent un dispositif de réglage qui, en position "T", les rend aptes à capter un champ magnétique tel que le champ magnétique produit par un transducteur de capsule téléphonique. Ces prothèses fonctionnent correctement lorsque le transducteur est de type électromagnétique.

Par contre, le champ magnétique rayonné par la bobine d'un capteur électrodynamique est limité, voire insuffisant pour assurer le fonctionnement correct d'une prothèse auditive. Cet inconvénient, fondamental pour la téléphonie, suffit à repousser les transducteurs électrodynamiques pour ne retenir que les électromagnétiques, parfaitement adaptés à cette fonction.

La présente invention a notamment pour objet d'apporter des perfectionnements aux capsules réceptrices téléphoniques permettant de produire, quel que soit le type de transducteur utilisé, un champ magnétique suffisant pour être capté par une prothèse auditive.

En particulier, l'invention permet de réaliser une capsule à transducteur notamment de type électrodynamique présentant en elle-même la fonction de rayonnement magnétique pour prothèses auditives, sans nécessiter la connexion d'un dispositif extérieur.

Cela constitue un avantage certain, car les connexions de dispositifs extérieurs éventuels nécessitent des modifications importantes des connecteurs rapides habituellement utilisés, et ces connexions sont rarement compatibles. En outre, une connexion d'un dispositif en série nécessiterait l'adjonction d'une troisième borne extérieure. Au contraire, le perfectionnement selon l'invention évite tous les problèmes liés aux connecteurs.

Un autre objet de l'invention est de réaliser ces perfectionnements à moindre coût, et notamment sans compliquer exagérément les opérations de fabrication de la capsule.

Un autre objet de l'invention est de réaliser ces perfectionnements sans perturber de façon sensible l'efficacité du transducteur.

Pour atteindre ces objets ainsi que d'autres, la présente invention prévoit de munir la capsule d'un dispositif auxiliaire interne, alimenté par les signaux électriques de la ligne d'alimentation, et produisant un champ magnétique auxiliaire modulé par ces signaux et susceptible d'être capté à l'extérieur de la capsule par une prothèse auditive de malentendant.

Selon une autre caractéristique de l'invention, le dispositif auxiliaire est connecté à la ligne d'alimentation et est disposé dans le boîtier de telle manière que le champ magnétique auxiliaire qu'il produit soit en phase avec le champ magnétique éventuellement produit par le transducteur.

Selon une autre caractéristique, le dispositif auxiliaire est une bobine auxiliaire montée fixe dans le boîtier, et formée d'un fil conducteur enroulé autour d'un cadre tubulaire isolant solidaire du boîtier, les extrémités du fil étant connectées électriquement en série ou en parallèle avec le transducteur.

Selon une caractéristique particulièrement intéressante pour abaisser le coût de production, et adaptée à l'utilisation d'un transducteur de type électrodynamique, comprenant une membrane centrale solidaire d'une bobine principale connectée à la ligne d'alimentation par des fils souples, l'ensemble membrane-bobine principale étant suspendu dans le boîtier par une suspension périphérique annulaire élastique reliant le pourtour circulaire de la membrane et un support périphérique rigide solidarisé au boîtier, l'ensemble bobine principale-membrane-suspension-support rigide forme un sous-ensemble appelé équipage mobile, monté à part et rapporté ensuite dans le boîtier; la bobine auxiliaire est fixée sur le support rigide et constitue, avec l'équipage mobile, un sous-ensemble compact.

D'autres objets, caractéristiques et avantages de la présente invention, ressortiront de la description suivante d'un mode de réalisation particulier, faite en relation avec les figures jointes, parmi lesquelles :

- la figure 1 représente une vue en coupe d'une capsule téléphonique selon la présente invention ; et

- la figure 2 représente une vue partielle en coupe selon un mode de réalisation préféré.

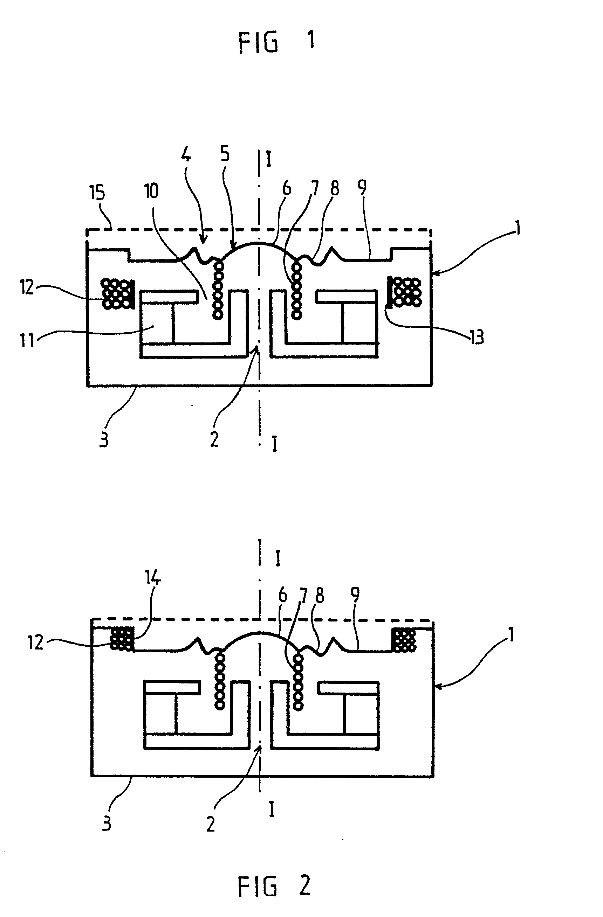

Les figures 1 et 2 illustrent un mode de réalisation dans lequel la capsule 1 est munie d'un transducteur 2 de type électrodynamique.

La capsule 1 comprend un boîtier 3 en matériau amagnétique, ouvert à une extrémité 4, l'extrémité 4 étant fermée successivement par l'équipage mobile 5 et par un couvercle de protection mécanique 15 en matériau amagnétique. L'équipage mobile 5 comprend une membrane centrale 6, solidaire d'une bobine principale 7 connectée à deux bornes du boîtier par des fils souples non représentés sur les figures. L'ensemble membrane centrale 6 - bobine principale 7 est maintenu suspendu dans le boîtier 3 par une suspension périphérique annulaire élastique 8, formée d'une membrane à ondulations concentriques, la suspension reliant le pourtour circulaire de la membrane centrale 6 et un support périphérique rigide 9 lui-même solidarisé selon son pourtour au boîtier 3. La bobine principale 7 pénètre partiellement dans l'entrefer 10 d'un aimant permanent 11 disposé à l'intérieur du boîtier 3, comme le représente la figure 1.

Le champ magnétique rayonné par la bobine principale 7 est insuffisant pour exciter une prothèse auditive.

Pour rendre la prothèse auditive sensible à la capsule 1, on insère en outre dans le boîtier 3 une bobine auxiliaire 12, montée fixe

4

dans le boîtier, formée d'un fil conducteur enroulé autour d'un cadre tubulaire isolant 13 solidaire du boîtier 3. Les extrémités du fil de la bobine auxiliaire 12 sont connectés électriquement en série ou en parallèle avec la bobine principale 7. La bobine auxiliaire 12 produit un champ magnétique, image des signaux électriques reçus par la capsule, et susceptible de rayonner hors du boîtier 3 pour être capté par une prothèse auditive de malentendant.

De façon préférée, la bobine auxiliaire 12 est disposée dans le boîtier 3 de manière concentrique à la bobine principale 7, c'est-à-dire admettant le même axe de symétrie I-I. En outre, la bobine auxiliaire 12 est connectée électriquement par rapport à la bobine principale 7 selon un sens assurant la production d'un champ magnétique en phase avec le champ magnétique produit par la bobine principale 7. En effet, si le branchement est contraire, il apparaît des pertes magnétiques fonctions des deux champs rayonnés, pertes occasionnées par les rayonnements contradictoires.

Il est particulièrement important de pouvoir introduire la bobine auxiliaire 12 au moment même de la fabrication de la capsule 1. En effet, il est alors possible de repérer les bornes des différentes bobines, et de s'assurer ainsi que les connections sont correctes pour produire des champs magnétiques en phase. La capsule à double bobine permet, à coup sûr, d'obtenir un rendement optimum du fait de ce repérage des pôles à la fabrication. La connection des bobines peut en outre se faire par simple soudure, sans nécessiter de connecteurs supplémentaires, ce qui tend à réduire sensiblement le coût du dispositif.

Selon une disposition préférée, l'ensemble bobine principale 7 - membrane 6 - suspension 8 - support rigide 9 forme un sous ensemble appelé équipage mobile 5. L'équipage mobile, lors de la fabrication de la capsule, est monté à part et est rapporté ensuite dans le boîtier 3. Il est alors préférable de fixer la bobine auxiliaire 12 directement sur le support rigide 9, ce qui permet l'assemblage de cette bobine auxiliaire 12 lors de la fabrication de l'équipage mobile 5. La bobine auxiliaire 12 forme ainsi avec l'équipage mobile 5 un sous-ensemble compact. On solidarise pour cela le cadre 13 de la bobine auxiliaire 12 sur le support rigide 9. Il est possible de bobiner le fil en une seule opération, le même fil formant d'une part la bobine principale 7, et d'autre part la bobine auxiliaire 12, ce qui évite par la même occasion le repérage des bornes des deux bobines.

Il est possible de simplifier la construction en prévoyant, comme le représente la figure 2, un support périphérique rigide 9 comportant un épaulement 14 formant une surface extérieure cylindrique pour faire office de cadre et recevoir le fil de la bobine auxiliaire 12. Le surcoût réalisé par l'adjonction d'une masse de cuivre supplémentaire représente un faible pourcentage du prix du transducteur. Cette augmentation de coût est raisonnable compte tenu des avantages techniques acquis. Il devient ainsi possible de fabriquer, avec des technologies modernes, des transducteurs performants pour la téléphonie et compatibles avec les prothèses auditives pour malentendants.

La bobine auxiliaire ne doit pas perturber le fonctionnement de la bobine principale. En particulier, il convient d'éviter que l'insertion de la bobine auxiliaire ne fasse chuter l'efficacité acoustique du transducteur. On peut pour cela connecter la bobine principale et la bobine auxiliaire électriquement en parallèle, et choisir une bobine auxiliaire qui ait une impédance électrique au moins huit à dix fois supérieure à celle de la bobine principale.

En alternative, la bobine principale 7 et la bobine auxiliaire 12 sont connectées en série ; dans ce cas, la bobine auxiliaire 12 a une impédance électrique au moins huit à dix fois inférieure à celle de la bobine principale 7.

La présente invention n'est pas limitée aux modes de réalisation qui ont été explicitement décrits, mais elle en inclut les diverses variantes et généralisations contenues dans le domaine des revendications ci-après.

## REVENDICATIONS

1 - Capsule réceptrice téléphonique, comprenant un boîtier (3) renfermant un transducteur (2) pour transformer en vibrations sonores les signaux électriques acheminés sur ses bornes d'entrée par une ligne d'alimentation, caractérisée en ce que le boîtier est en matériau amagnétique, et en ce que la capsule comprend en outre un dipositif auxiliaire (12), disposé dans le boîtier (3), alimenté par les signaux électriques de la ligne d'alimentation, et produisant un champ magnétique auxiliaire modulé par ces signaux et susceptible d'être capté à l'extérieur du boîtier par une prothèse auditive de malentendant.

2 - Capsule réceptrice selon la revendication 1, caractérisée en ce que le dispositif auxiliaire (12) est connecté à la ligne d'alimentation et est disposé dans le boîtier (3) de telle manière que le champ magnétique auxiliaire qu'il produit soit en phase avec le champ magnétique éventuellement produit par le transducteur (2).

3 - Capsule réceptrice selon la revendication 1, caractérisée en ce que le dispositif auxiliaire est une bobine auxiliaire (12) montée fixe dans le boîtier (3), et formée d'un fil conducteur enroulé autour d'un cadre tubulaire isolant (13) solidaire du boîtier, les extrémités du fil étant connectées électriquement en série ou en parallèle avec le transducteur (2).

4 - Capsule réceptrice selon la revendication 3, dans laquelle le transducteur (2) est de type électrodynamique, comprenant une membrane centrale (6) solidaire d'une bobine principale (7) connectée à la ligne d'alimentation par des fils souples, l'ensemble membrane (6) - bobine principale (7) étant suspendu dans le boîtier (3) par une suspension périphérique annulaire élastique (8) reliant le pourtour circulaire de la membrane (6) et un support périphérique rigide (9) solidarisé au boîtier, la bobine (7) principale pénétrant partiellement dans l'entrefer (10) d'un aimant permanent (11), caractérisée en ce que :
- l'ensemble bobine principale (7) - membrane (6) - suspension (8) - support rigide (9) forme un sous-ensemble appelé équipage mobile (5), monté à part et rapporté ensuite dans le boîtier (3),
- la bobine auxiliaire (12) est fixée sur le support rigide (9) et constitue, avec l'équipage mobile (5), un sous-ensemble compact.

5 - Capsule réceptrice selon la revendication 4, caractérisée en ce que la bobine principale (7) et la bobine auxiliaire (12) sont bobinées au cours de la même opération de réalisation de l'équipage mobile (5), et avec le même fil.

6 - Capsule réceptrice selon la revendication 5, caractérisée en ce que le support rigide (9) comporte un épaulement (14) formant une surface extérieure cylindrique pour faire office de cadre et recevoir le fil de la bobine auxiliaire (12).

7 - Capsule réceptrice selon la revendication 4, caractérisée en ce que la bobine principale (7) et la bobine auxiliaire (12) sont connectées électriquement en parallèle, et en ce que la bobine auxiliaire (12) a une impédance électrique au moins huit à dix fois supérieure à celle de la bobine principale (7).

8 - Capsule réceptrice selon la revendication 4, caractérisée en ce que la bobine principale (7) et la bobine auxiliaire (12) sont connectées électriquement en série, et en ce que la bobine auxiliaire (12) a une impédance électrique au moins huit à dix fois inférieure à celle de la bobine principale (7).

FIG 1

FIG 2

Office européen
des brevets

**RAPPORT DE RECHERCHE EUROPEENNE**

EP 85 42 0131

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | DE-B-1 133 761 (F.R. BEYER)<br>* En entier * | 1,3 | H 04 R 25/00 |
| A | FR-A-1 178 594 (E. AAE)<br>* Figures 1-4; page 1, colonne de droite, alinéa 1; page 2, colonne de droite, ligne 32 - page 3, colonne de gauche, ligne 46 * | 1,3 | |
| A | US-A-2 656 421 (S. LYBARGER)<br>* En entier * | 1,3-6 | |
| A | US-A-2 524 393 (S. LYBARGER)<br>* En entier * | 1,3-6 | |
| A | US-A-2 160 829 (C.W. CHERRY)<br>* Page 1, colonne de gauche, lignes 4-51 * | 1 | DOMAINES TECHNIQUES RECHERCHES (Int Cl 4) |
| A | US-A-2 554 834 (G. LAVERY)<br>* En entier * | 1,3-6 | H 04 R |

Le présent rapport de recherche a été établi pour toutes les revendications

| Lieu de la recherche | Date d'achèvement de la recherche | Examinateur |
|---|---|---|
| LA HAYE | 03-10-1985 | MINNOYE G.W. |